# EUROPEAN PATENT APPLICATION

(11) **EP 2 604 750 A1**
(43) Date of publication of application: **19.06.2013**
(21) Application number: 11193967.4
(22) Date of filing: 16.12.2011
(51) Int. Cl.: D06F 58/26, F16J 15/06

(54) **Household laundry washing and drying machine**

(71) Applicant: Electrolux Home Products Corporation N.V., 1130 Brussel (BE)
(72) Inventor: Bruna, Alessandro, 33080 Porcia (PN) (IT); Mazzocco, Roberto, 33080 Porcia (PN) (IT)
(74) Representative: Nardoni, Andrea

(57) **Abstract**

Laundry washing and drying machine (1) comprising:
- an outer boxlike casing (2),
- a washing tub (3) located inside the casing (2),
- a air duct assembly (6) comprising an air heating device (8) attached onto the washing tub (3) and structured to heat up the air and to channel it into the washing tub (3), and an air cooling device (7) fluidly connected to the inside of the washing tub (3) to receive and cool down the air exiting from washing tub (3). The air inlet (12a) of the air heating device (8) is coupled to the air outlet (10a) of the air cooling device (7), with the interposition of a sealing gasket (14) housed/recessed in a corresponding seat or groove (13) provided in one between the air heating device (8) and the air cooling device (7). The seat or groove (13) is provided with an inspection window (15) that allows visual check of the presence and/or correct positioning of the sealing gasket (14) inside the seat or groove (13).

## Description

The present invention relates to a household laundry washing and drying machine.

As is known, today's front-loading laundry washing and drying machines generally comprise: a substantially parallelepiped-shaped outer boxlike casing structured for resting on the floor; a substantially cylindrical, bell-shaped washing tub which is suspended in floating manner inside the casing via a number of coil springs and shock-absorbers, with the front opening/mouth directly facing a laundry loading/unloading pass-through opening provided in the front wall of the casing; a substantially cylindrical elastically-deformable bellows which connects in watertight manner the front mouth/opening of the bell-shaped washing tub to the laundry loading/unloading opening on front wall of the casing; and a porthole door which is hinged to the front wall of the casing to rotate to and from a closing position in which the door rests on the front face of the casing to close the laundry loading/unloading on the front wall and substantially watertight seal the washing tub.

The front-loading laundry washing and drying machines of the above type furthermore comprise: a substantially bell-shaped, cylindrical revolving drum which is structured for housing the laundry to be washed and/or dried, and is housed in axially rotating manner inside the washing tub for rotating about its longitudinal reference axis; an electric motor assembly which is attached outside of the washing tub, and is structured for driving into rotation the revolving drum about its longitudinal reference axis inside the washing tub; and a, preferably closed-circuit, hot-air generator which is structured to circulate inside the washing tub a stream of hot air having a low moisture content, and which flows through the revolving drum and over the laundry inside the drum to rapidly dry the laundry.

The hot-air generator is structured for gradually drawing air from the washing tub; cooling down the air arriving from the washing tub so to extract and retain the surplus moisture in the air; heating the dehumidified air to a predetermined temperature, normally higher than the temperature of the air arriving from the washing tub; and feeding the heated, dehumidified air back into the washing tub, where it flows over the laundry stored inside the revolving drum to dry said laundry.

In several models of front-loading laundry washing and drying machine currently on the market, the cooling down and dehumidification of the air drawn from the washing tub is performed inside a cold-water condenser which is integrated on the back of the washing tub, and which uses a shower of cold tap water of the water mains for removing heat from the air arriving from the washing tub.

The heating up of the dehumidified air coming out of the cold-water condenser is performed inside an air-duct assembly which, in some known washing machines, is rigidly attached to the top of the washing tub so as to have a first opening (the air-intake mouth), in direct communication with the cold-water condenser, and a second opening (the air-outlet mouth) in direct communication with the washing tub close to the front mouth of the latter, and which internally houses an electric fan or blower that circulates the air across the washing tub and a resistor that heats up the dehumidified air directed back into the washing tub.

Since the air-duct assembly is relatively heavy component and the washing tub shakes/jerks very hardly during the washing cycle, the coupling between the air-duct assembly and the cold-water condenser integrated on the back of the washing tub is usually subjected to high mechanical stresses that may cause air leakages. To avoid these air leakages, a sealing gasket, typically annular, is generally arranged at the air-intake mouth of the air-duct assembly.

Unluckily, nowadays the sealing gasket is completely recessed inside the air-duct assembly or the washing tub, and gets totally hidden when washing tub and air-duct assembly are coupled to one another. This arrangement causes several problems during the subsequent assembly of the household appliance.

In fact, washing tub and air-duct assembly are generally assembled/coupled to one another far in advance to the rest of the laundry washing and drying machine, usually in a specific and separated production line, thus a subsequent check of the presence and correct positioning of the sealing gasket along the main production line of the household-appliance is unfeasible.

Aim of the present invention is to allow a verifying the presence/correct positioning of the sealing gasket arranged at the air-intake mouth of the air-duct assembly, even after the assembly of the air-duct assembly to the washing tub.

Applicant has found that by providing the seat or groove in which the sealing gasket is housed/recessed with an inspection window that allows visual check of the presence and/or correct positioning of the sealing gasket, it is possible to check the presence/correct positioning of the sealing gasket even after the assembly of the air-duct assembly to the washing tub.

In compliance with the above aims, according to the present invention there is provided a laundry washing and drying machine comprising:
- an outer boxlike casing,
- a washing tub located inside the casing,
- a air duct assembly comprising an air heating device attached onto the washing tub and structured to heat up the air and to channel it into said washing tub, and an air cooling device fluidly connected to the inside of said washing tub to receive and cool down the air exiting from washing tub.

The air inlet of the heating device is coupled to the air outlet of the air cooling device, with the interposition of a sealing gasket housed/recessed in a corresponding seat or groove provided in one between the air heating device and the air cooling device; the seat or groove is provided with an inspection window that allows visual check of the presence and/or correct positioning of the sealing gasket inside the seat or groove.

In an advantageous embodiment of the invention, the air heating device comprises an outer tubular body which inlet comprises a first mouth coupled to a corresponding first opening provided on the washing tub and comprised in the air outlet of the air cooling device; in this advantageous embodiment, one between the washing tub and tubular body is provided with the seat or groove which delimits/surrounds the corresponding first opening or mouth, while the remaining between the washing tub and the tubular body is provided with an outwards-projecting annular collar or sleeve which delimits/surrounds the corresponding first opening or mouth, respectively, and is structured to fit/engage into the seat or groove. In this embodiment the seat or groove is provided with the above mentioned inspection window.

In an advantageous embodiment, the seat or groove is provided into the upper rim of an outwards-projecting annular collet or sleeve which protrudes from the outer surface of the washing tub or of tubular body, and completely surrounds/delimits the corresponding first opening or mouth, respectively.

Preferably, the inspection window comprises a pass-through slot or notch that extends from the outer side flank of the outwards-projecting annular collet or sleeve up to the internal seat or groove. In this case the pass-through slot or notch preferably extends on the outer side flank of the outwards-projecting annular collet or sleeve substantially for the full depth of the seat or groove.

In a different advantageous embodiment the inspection window comprises a pass-through hole provided in the side flank of the annular collet or sleeve.

Preferably, the outwards projecting annular collar or sleeve is substantially cylindrical in shape.

Preferably, the air heating device comprises an air-pumping device which is housed inside the tubular body and is structured to circulate an airflow across the tubular body; the air-pumping device preferably comprises a fan or blower and a portion of the outer tubular body of the air-duct assembly is shaped so as to form the outer volute or impeller housing of the fan or blower. Preferably the impeller of the fan or blower is arranged inside the tubular body so as to be locally substantially coaxial to the seat or groove that houses the sealing gasket.

Preferably, the washing tub is substantially cylindrical and the upper opening or mouth is provided on the substantially cylindrical, lateral wall of the washing tub, approximately on the top of the washing tub.

Preferably the outwards-projecting annular collar or sleeve protrudes from the outer surface of the washing tub and the seat or groove housing the sealing gasket is provided on the outer tubular body of the air-duct assembly.

A non-limiting embodiment of the present invention will now be described, by way of example, with reference to the accompanying drawings, in which:
- Figure 1 is a perspective view, with parts removed for clarity, of a laundry washing and drying machine in accordance with the teachings of the present invention;
- Figure 2 is a rear view of the washing tub assembly of the Figure 1 laundry washing and drying machine with parts removed for clarity;
- Figure 3 is an enlarged view of the upper portion of the Figure 2 washing tub assembly; whereas
- Figures 4 and 5 are two partly-exploded perspective views, with parts removed for clarity, of the upper portion of the Figure 2 washing tub assembly.

It is underlined that in the enclosed figures there is illustrated a front-loading washing and drying machine; however it is clear that the present invention can be applied as well to a top-loading washing and drying machine.

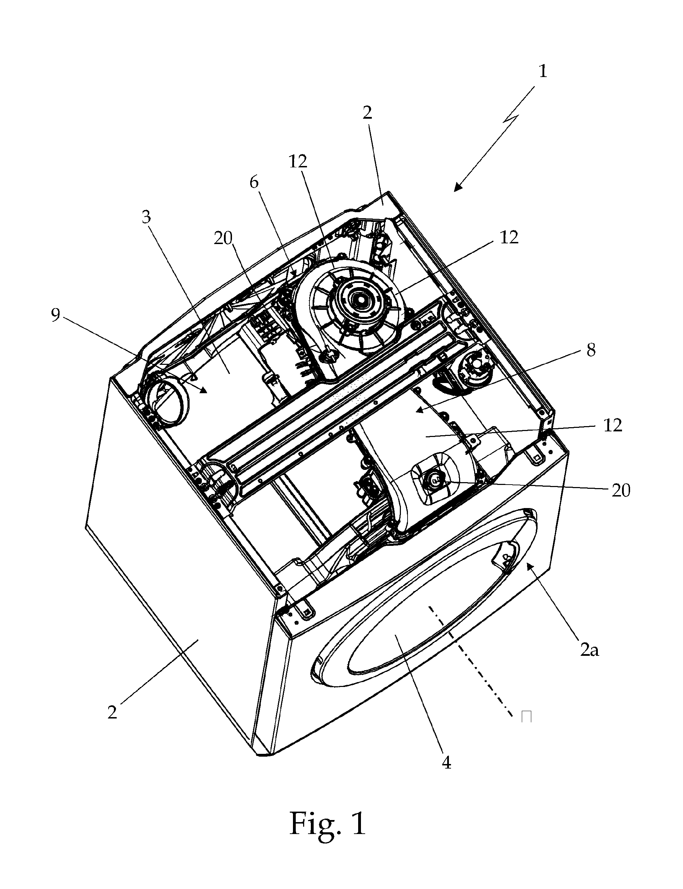

With reference to Figure 1, reference number 1 indicates as a whole a laundry washing and drying machine 1 that comprises:
- a preferably, though not necessarily, substantially parallelepiped-shaped outer boxlike casing 2, which is preferably structured for resting on the floor;
- a preferably, though not necessarily, substantially cylindrical, bell-shaped, hollow washing tub 3 which is arranged inside the casing 2, preferably with its front opening or mouth (in case of a front-loading washing machine) directly facing a laundry loading/ unloading pass-through opening provided in the front wall 2a of the boxlike casing 2;
- a substantially cylindrical, bell-shaped revolving drum (not shown) which is structured for housing the laundry to be washed and/or dried, and is housed in axially rotating manner inside the washing tub 3 so as to be able to freely rotate about its longitudinal reference axis; and
- a water and detergent supplying assembly (not shown) which is structured for selectively feeding into the washing tub 3, according to the selected washing cycle, a given amount of detergent, softener and/or other washing agent suitably mixed with the fresh water arriving from the water mains, or simply a given amount of fresh water arriving from the water mains.

In the example shown, washing tub 3 is preferably suspended in floating manner inside the boxlike casing 2 preferably, though not necessarily, via a suspension system preferably comprising a number of coil springs (not shown) and vibration dampers (not shown); and the front opening/mouth of washing tub 3 is preferably connected in watertight manner to the laundry loading/unloading opening on front wall 2a via a substantially cylindrical, elastically-deformable bellows (not shown).

The revolving drum is preferably arranged inside washing tub 3 so that the drum front opening is directly faced/aligned to the laundry loading/unloading opening on front wall 2a, and so that the drum rotation axis is preferably locally substantially coincident with the preferably, though non necessarily, substantially horizontally-oriented, longitudinal reference axis L of washing tub 3.

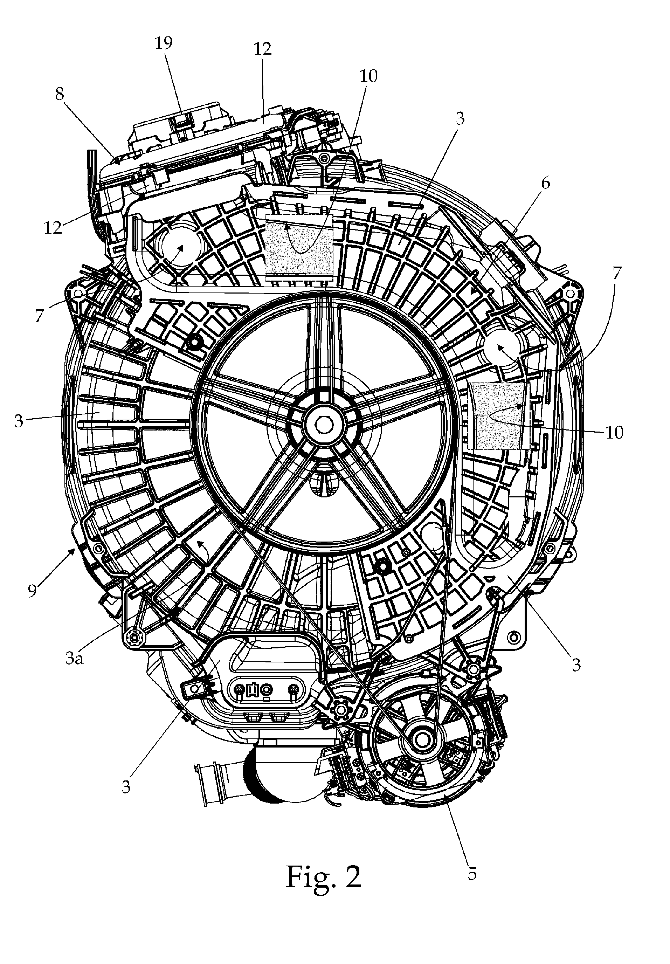

With reference to Figures 1 and 2, the front-loading laundry washing and drying machine 1 furthermore preferably comprises:
- a porthole door 4 which is preferably hinged to the front wall 2a of casing 2 to rotate about a preferably, though non necessarily, vertically-oriented reference axis to and from a closing position in which the peripheral border of the porthole door 4 rests completely on front wall 2a for closing the laundry loading/unloading opening and watertight sealing the washing tub 3;
- an electric motor assembly 5 which is preferably attached to washing tub 3 outside the latter, and is structured for driving into rotation the revolving drum about its longitudinal reference axis L inside the washing tub 3; and
- an internal, preferably closed-circuit, air duct assembly 6 which is structured to circulate inside the washing tub 3 a stream of hot air having a low moisture content, and which flows through the revolving drum and over the laundry located inside the drum to rapidly dry said laundry.

Advantageously the air duct assembly 6 is structured for gradually drawing air from washing tub 3; cooling down the air arriving from washing tub 3 so to extract and retain the surplus moisture in the air; heating the dehumidified air to a predetermined temperature preferably higher than that of the air arriving from washing tub 3; and feeding the heated, dehumidified air back into the washing tub 3, where it flows over the laundry stored inside the revolving drum to dry the laundry.

With reference to Figures 1 to 5, the air duct assembly 6 preferably comprises: an air cooling device 7 which is preferably, but not necessarily, integrated/provided directly on the back wall 3a of washing tub 3, is fluidly connected to the inside of washing tub 3, preferably on the bottom of the latter, to receive air from the inside of washing tub 3, and is structured to cool down the air arriving from washing tub 3 so to extract and retain the surplus moisture in the air drawn from washing tub 3.

The air duct assembly 6 preferably comprises an air heating device 8 which is preferably rigidly attached to the washing tub 3 outside the latter, is fluidly connected to both the washing tub 3 and the air cooling device 7 to allow the dehumidified air to flow from the air cooling device 7 back to washing tub 3, and is structured to heat up the dehumidified air that flows inside the air heating device 8 towards the washing tub 3.

When coupled to one another the washing tub 3 and the air heating device 8 forms the washing tub assembly 9 of the laundry washing and drying machine 1.

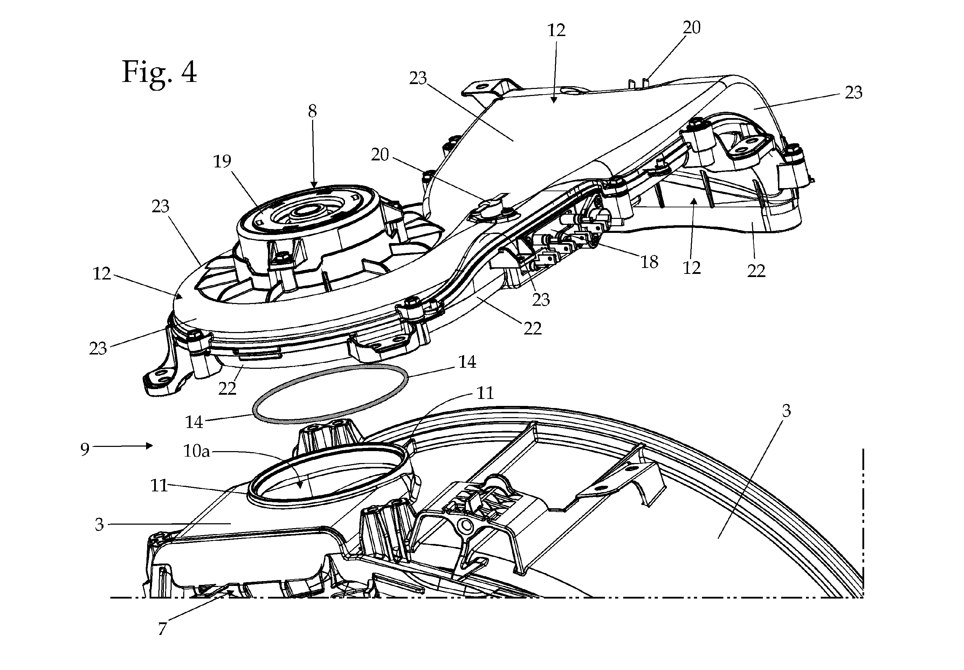

With particular reference to Figures 2 and 4, the air cooling device 7 of air duct assembly 6 preferably comprises a preferably, though not necessarily, substantially C-shaped, inner air-circulation duct 10 that extends preferably substantially vertically inside the back wall of washing tub 3 so as to have a first (preferably lower) opening or mouth (not shown) fluidly connected to, i.e. in direct communication with, the inside of washing tub 3, and a second (preferably upper) opening or mouth 10a which, before assembly the air cooling device 7 to the air heating device 8 (as in Figure 4), is fluidly connected to, i.e. in direct communication with, the outside of washing tub 3.

The first mouth (not shown) of air-circulation duct 10 (i.e. the air inlet of the air cooling device 7) is preferably located close to the bottom of the washing tub 3, whereas the second opening or mouth 10a (i.e. the air outlet of the air cooling device 7) is advantageously located on the substantially cylindrical, lateral wall of washing tub 3, preferably approximately on top of the tub, and is preferably completely surrounded/delimited by an outwards projecting annular collar or sleeve 11 that protrudes from the outer surface of the same lateral wall of washing tub 3.

The outwards projecting annular collar or sleeve 11 is preferably, though not necessarily, substantially cylindrical in shape.

In addition to the above, the air cooling device 7 preferably also comprises a cold-water supplying circuit (not shown) which is structured to selectively provide, inside a vertical section of the inner air-circulation duct 10, a shower/jet of cold water that cools down the airflow flowing upwards inside the air-circulation duct 10 and at same time reduces the moist degree of the airflow.

In other words, the air cooling device 7 preferably comprises a cold-water condenser 10 which is completely incorporated/integrated within the back 3a wall of washing tub 3.

With reference to Figures 1, 3, 4 and 5, the air heating device 8 of air duct assembly 6 is preferably rigidly attached to the lateral wall of washing tub 3, preferably approximately on the top of washing tub 3, and preferably comprises an outer tubular body 12, preferably structured for being firmly fixed to washing tub 3, preferably on the top of the latter, with a first opening or mouth 12a - hereafter called the air-intake mouth 12a (i.e. the air inlet opening of the air heating device 8) - fluidly connected to, i.e. in direct communication with, the upper opening or mouth 10a of the air-circulation duct 10 (i.e. the air outlet of the air cooling device 7); and with a second opening or mouth 12b - hereafter called the air-outlet mouth 12b (i.e. the air outlet of the air heating device 8) - fluidly connected to, i.e. in direct communication with, the inside of the washing tub 3. Preferably, but not necessarily, the second opening or mouth 12b is fluidly connected to the inside of an elastically-deformable bellows (not shown) connecting washing tub 3 to the laundry loading/unloading opening on front wall 2a of casing 2, preferably close to the front opening of washing tub 3.

Advantageously, the air outlet of the air cooling device 7 is fluidly connected (i.e. coupled), to the air inlet of the air heating device 8, with the interposition of a sealing gasket 14, which will be better illustrated in the following.

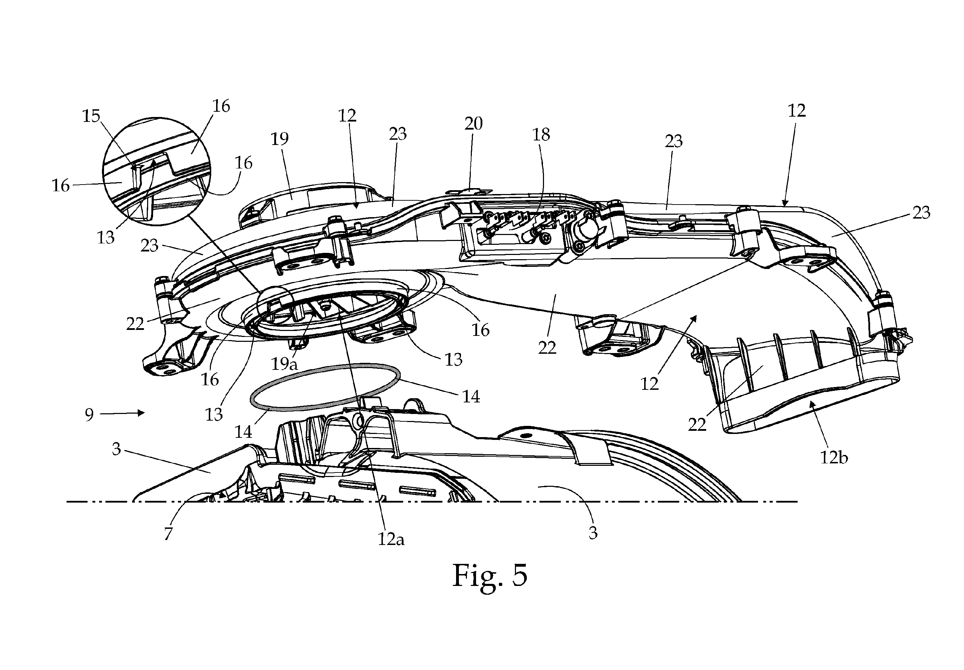

Preferably, as illustrated for example in Figure 5, the outer tubular body 12 is provided with a seat or groove 13 which preferably surrounds/ delimits the air-intake mouth 12a of tubular body 12 and is preferably substantially complementary in shape to the outwards-projecting annular collar or sleeve 11 protruding from the outer surface of washing tub 3, so as to receive/be engaged by said outwards-projecting annular collar or sleeve 11.

Advantageously, as mentioned above, the washing tub assembly 9 furthermore comprises a sealing gasket 14 which is preferably made of elastomeric material and is preferably suitably dimensioned for being completely recessed/housed inside the seat or groove 13 of tubular body 12, and preferably for being at least partly pressed/deformed against the bottom of said seat or groove 13 by the outwards-projecting annular collar or sleeve 11 of washing tub 3 so as to seal in substantially airtight manner the tubular body 12 and the washing tub 3 to one another.

The portion of outer tubular body 12 delimiting/forming the seat or groove 13 is furthermore provided with at least one inspection window 15 which is structured/dimensioned to allows visual check of the presence and/or the correct positioning of the sealing gasket 14 on the bottom of the seat or groove 13.

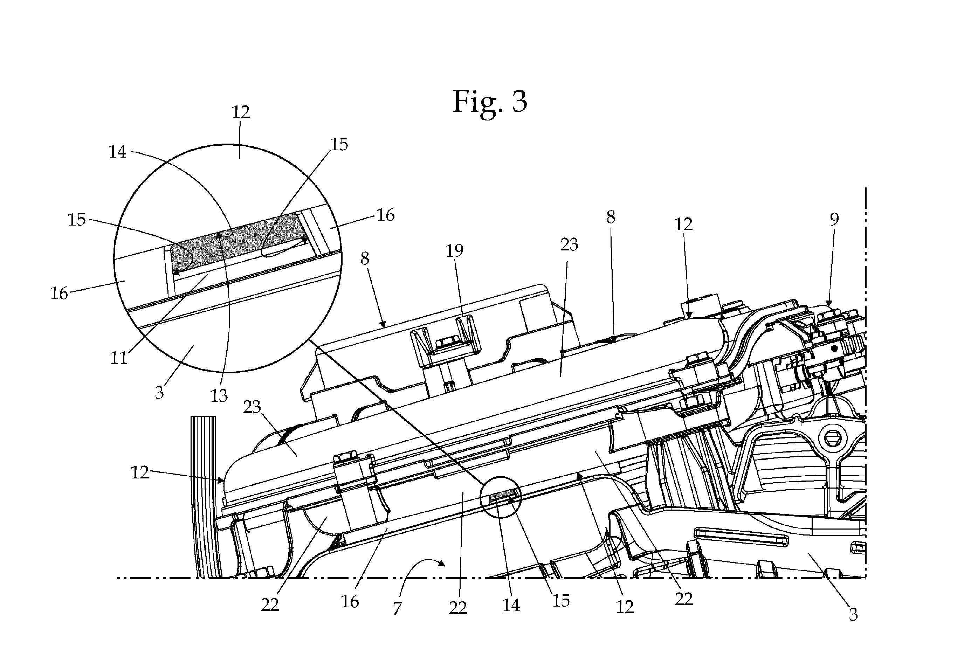

With reference to Figures 3 and 5, in the example shown the seat or groove 13 is preferably provided into the upper rim of an outwards-projecting annular collet or sleeve 16 which protrudes from the outer surface of tubular body 12 and completely surrounds/delimits the air-intake mouth 12a of tubular body 12.

Preferably inspection window 15 comprises a pass-through slot or notch 15 that extends preferably from the outer side flank of the outwards-projecting annular collet or sleeve 16 up to the seat or groove 13.

Preferably the pass-through slot or notch 15 extends on the outer side flank of the outwards-projecting annular collet or sleeve 16 substantially for the full depth of the seat or groove 13.

In a further embodiment, not illustrated, the inspection widow 15 may be a pass through hole provided in the side flank of the annular collet or sleeve 16.

With particular reference to Figures 3, 4 and 5, the air heating device 8 of air duct assembly 6 preferably comprises also an electric heating device 18 which is at least partly housed inside tubular body 12 and is structured to heat up, when electrically powered, the air that flows across tubular body 12; and preferably also an electric fan or blower 19 or other air-pumping device which is housed inside tubular body 12, preferably upstream of electric heating device 18, and is structured to circulate across tubular body 12 an airflow that subsequently flows across the washing tub 3 and the air cooling device 7 for finally returning back to tubular body 12.

Preferably, though not necessarily, the air heating device 8 comprises one or more temperature sensors 20 which are located inside, or faced to the inside of, tubular body 12 and are structured for measuring the temperature of the air flowing inside tubular body 12. In the example shown, air heating device 8 preferably comprises two temperature sensors 20 which are preferably, though not necessarily, located one close to the second opening or mouth 12b of the tubular body 12 and the other between the electric fan or blower 19 and the heating device 18.

With reference to Figures 1, 4 and 5, in the example shown the electric heating device 18 is preferably housed inside a mid portion of tubular body 12, whereas the fan or blower 19 is preferably located upstream of heating device 18, preferably recessed on a portion of tubular body 12 suitably shaped to form the outer volute or impeller housing of fan or blower 19.

In addition to the above, the portion of tubular body 12 forming the outer volute or impeller housing of fan or blower 19 is preferably aligned to the seat or groove 13 housing the sealing gasket 14, i.e. to the air-intake mouth 12a of tubular body 12, so that the impeller 19a of fan or blower 19 is preferably arranged inside tubular body 12 so as to be locally substantially coaxial to the outwards-projecting annular collet or sleeve 16 surrounding/delimiting the air-intake mouth 12a of outer tubular body 12, i.e. so as to be locally substantially coaxial to the seat or groove 13 that houses the sealing gasket 14.

In other words, the outwards-projecting annular collet or sleeve 16 surrounding/ delimiting the air-intake mouth 12a of tubular body 12 is preferably arranged outside of the portion of tubular body 12 forming the outer volute or impeller housing of fan or blower 19.

With reference to Figures 4 and 5, in the example shown the outer tubular body 12 preferably comprises at least two complementary hemi-shells 22 and 23 having their peripheral edges shaped/structured for being reciprocally coupled to compose/form the tubular body 12, and an intermediate sealing gasket (not shown) which is made of a suitable elastomeric material and is structured for being interposed between the peripheral edges of the hemi-shells 22, 23 to seal in substantially airtight manner the hemi-shells 22 and 23 to one another.

In the example shown tubular body 12 is preferably composed by a substantially basin-shaped, lower hemi-shell 22 which is structured for being rigidly fixed to the top of the washing tub 3 preferably via a number of anchoring screws and which incorporates the outwards-projecting annular collet or sleeve 16 surrounding/delimiting the air-intake mouth 12a of outer tubular body 12; and by a substantially lid-shaped, upper hemi-shell 23 which is structured for being rigidly fixed directly to the basin-shaped lower hemi-shell 22 and is suitably shaped/ dimensioned to rest in abutment on the whole annular upper rim of the hemi-shell 22 to completely close the basin-shaped lower hemi-shell 22.

A first portion of the outer volute of fan or blower 19 is preferably, though not necessarily, provided directly on the basin-shaped, lower hemi-shell 22 locally substantially coaxial to the outwards-projecting annular collet or sleeve 16 surrounding/ delimiting the air-intake mouth 12a of outer tubular body 12, whereas a second complementary portion of the outer volute of fan or blower 19 is provided on the lid-shaped upper hemi-shell 23, so that the complete outer volute or impeller casing of fan or blower 19 is composed when the upper and lower hemi-shells 22 and 23 are couplet to one another.

Preferably the substantially basin-shaped, lower hemi-shell 22 is furthermore shaped/dimensioned so to directly house the electric heating device 18, whereas the substantially lid-shaped, upper hemi-shell 22 is preferably, though not necessarily, structured/shaped to directly support the one or more temperature sensors 20.

Both upper and lower hemi-shells 22 and 23 are preferably made of a rigid metal material.

General operation of the front-loading laundry washing and drying machine 1 is clearly inferable from the above description, with no further explanation required.

The advantages connected to the presence of the inspection window 15 at air-intake mouth 12a of tubular body 12 are large in number. Thanks to the inspection window 15 on tubular body 12, for example, a person working at beginning of the household-appliance main production line is allowed to immediately see whenever the sealing gasket 14 is correctly interposed between tubular body 12 and washing tub 3, thus allowing a immediate discard/accommodating of a faulty washing tub assembly 9 with the money saving concerned.

Clearly, changes may be made to the laundry washing and drying machine 1 as described herein without, however, departing from the scope of the present invention.

For example, in a different embodiment the outwards-projecting annular collet or sleeve 16, i.e. the seat or groove 13 housing the sealing gasket 14, could be arranged on the lateral wall of washing tub 3 so as to completely surround/ delimit the upper opening or mouth 10a of the inner air-circulation duct 10, whereas the outwards projecting annular collar or sleeve 11 could be located on tubular body 12 so as to completely surround/delimit the air-intake mouth 12a of outer tubular body 12.

In another embodiment, not illustrated, the second opening or mouth 10a may be provided on the back wall 3a of the washing tub 3.

## Claims

1. Laundry washing and drying machine (1) comprising:
- an outer boxlike casing (2),
- a washing tub (3) located inside the casing (2),
- a air duct assembly (6) comprising an air heating device (8) attached onto the washing tub (3) and structured to heat up the air and to channel it into said washing tub (3), and an air cooling device (7) fluidly connected to the inside of said washing tub (3) to receive and cool down the air exiting from washing tub (3),
wherein the air inlet (12a) of said air heating device (8) is coupled to the air outlet (10a) of said air cooling device (7), with the interposition of a sealing gasket (14) housed/recessed in a corresponding seat or groove (13) provided in one between said air heating device (8) and said air cooling device (7),
**characterized in that**
said seat or groove (13) is provided with an inspection window (15) that allows visual check of the presence and/or correct positioning of the sealing gasket (14) inside said seat or groove (13).

2. Laundry washing and drying machine according to Claim 1, wherein said air heating device (8) comprises an outer tubular body (12) which air inlet comprises a first mouth (12a) coupled to a corresponding first opening (10a) provided on said washing tub (3) and comprised in the air outlet of said air cooling device (7),
wherein one between said washing tub (3) and tubular body (12) is provided with said seat or groove (13) which delimits/surrounds the corresponding first opening (10a) or mouth (12a), while the remaining between said washing tub (3) and tubular body (12) is provided with an outwards-projecting annular collar or sleeve (11) which delimits/surrounds the corresponding first opening (10a) or mouth (12a) and is structured to fit/engage into said seat or groove (13), and
wherein said seat or groove (13) is provided with said inspection window (15).

3. Laundry washing and drying machine according to Claim 2, wherein the seat or groove (13) is provided into the upper rim of an outwards-projecting annular collet or sleeve (16) which protrudes from the outer surface of the washing tub (3) or of tubular body (12) and completely surrounds/delimits the corresponding first opening (10a) or mouth (12a).

4. Laundry washing and drying machine according to Claim 3, wherein the inspection window (15) comprises a pass-through slot or notch (15) that extends from the outer side flank of the outwards-projecting annular collet or sleeve (16) up to the internal seat or groove (13).

5. Laundry washing and drying machine according to Claim 4, **characterized in that** said pass-trough slot or notch (15) extends on the outer side flank of the outwards-projecting annular collet or sleeve (16) substantially for the full depth of the seat or groove (13).

6. Laundry washing and drying machine according to Claim 3, wherein the inspection window (15) comprises a pass-through hole provided in the side flank of said annular collet or sleeve (16).

7. Laundry washing and drying machine according to any one Claims 2 to 6, wherein the outwards projecting annular collar or sleeve (11) is substantially cylindrical in shape.

8. Laundry washing and drying machine according to any one of Claims 2 to 7, wherein said air heating device (8) comprises an air-pumping device (19) which is housed inside the tubular body (12) and is structured to circulate an airflow across said tubular body (12), said air-pumping device (19) comprising a fan or blower (19), and wherein a portion of the outer tubular body (12) of the air-duct assembly (8) is shaped so as to form the outer volute or impeller housing of said fan or blower (19).

9. Laundry washing and drying machine according to Claim 8, wherein the impeller (19a) of said fan or blower (19) is arranged inside the tubular body (12) so as to be locally substantially coaxial to the seat or groove (13) that houses the sealing gasket (14).

10. Laundry washing and drying machine according to one or more of Claims 2 to 9, wherein said washing tub (3) is substantially cylindrical and said upper opening or mouth (10a) is provided on the substantially cylindrical, lateral wall of the washing tub (3), approximately on the top of the washing tub (3).

11. Laundry washing and drying machine according to any one of claims 2 to 10, wherein the outwards-projecting annular collar or sleeve (11) protrudes from the outer surface of the washing tub (3) and the seat or groove (13) housing the sealing gasket (14) is provided on the outer tubular body (12) of the air-duct assembly (8).
